# EUROPEAN PATENT APPLICATION

(11) **EP 2 251 193 A1**
(43) Date of publication of application: **17.11.2010**
(21) Application number: 10004796.8
(22) Date of filing: 06.05.2010
(51) Int. Cl.: B32B 21/04, B29C 59/00, B44C 1/24, B44C 5/04, B44F 9/02, E04F 15/02, B23K 26/00

(54) **Laminate panel**

(30) Priority: 11.05.2009 BE 200900300
(71) Applicant: Flooring Industries LTD./SARL., 8070 Bertrange (LU)
(72) Inventor: Segaert, Martin, 8900 Ieper (BE)
(74) Representative: Donné, Eddy

(57) **Abstract**

Laminate panel of the type comprising a substrate (2) and a provided-thereon synthetic material layer (5) with a printed decor (4), wherein said synthetic material layer (5) at the surface (20) comprises a zone (22-22A) of reduced gloss degree, **characterized in that** said zone (22-22A) in itself has a microstructure of uniformly distributed recesses (21) and/or protrusions. The invention also relates to methods and press elements which are suited for manufacturing such laminate panels.

## Description

This invention relates to laminate panels as well as to methods for manufacturing laminate panels.

More particularly, the invention relates to laminate panels which are of the type comprising a substrate and a provided-thereon synthetic material) layer with a printed decor. Herein, said synthetic material layer forms a decorative top layer on said substrate. This may relate, for example, to floor panels which substantially consist of a substrate, for example, an MDF or HDF (Medium or High Density Fiberboard) panel, and a laminate top layer provided thereon.

More particularly, the invention relates to laminate panels comprising a printed decor with a transparent or translucent synthetic material layer extending there above. It is known that such decor, whether or not by the intermediary of primer layers, can be printed directly on the substrate. However, the decor can also be provided on a material sheet, such as a paper sheet, which is included in said top layer. The transparent or translucent synthetic material layer forms a protective layer above the printed decor and can comprise, for example, wear-resistant particles, such as aluminum oxide. It is not excluded that this protective layer also comprises a material sheet, such as a paper sheet. Such laminate floor panel can be manufactured, for example, according to a DPL (Direct Pressure Laminate) or HPL (High Pressure Laminate) technique. In the case of a DPL technique, one or more material sheets provided with resin are brought, together with the substrate, into a press device, where, by means of a press element and under the influence of increased pressure and temperature, they are bonded to each other as well as to the substrate. Such bonds are obtained by curing said resin and there is thus no necessity of a separate adhesive or glue layer for attaching the top layer on the substrate. In the case of an HPL technique, the top layer is formed separately on the basis of two or more material sheets provided with resin, before the thus obtained top layer is applied on the substrate, for example, by attaching it to the substrate by means of a separate layer of glue.

Further, it is known, for example, from WO 01/96689, that at the surface or the decor side of such coated panels, in other words, at the surface of the synthetic material layer, a relief of impressed portions can be formed, by which, for example, the natural structure of the motif represented in said decor can be imitated. So, for example, in the case that the decor represents a wood motif, a relief can be used which imitates a wood structure. Such wood structure possibly may correspond to the underlying decor, by which then so-called impressions in register with the printed decor are obtained. It is also known, for example, from WO 2006/063803, to realize zones of different gloss degree at the surface, said zones whether or not corresponding to the decor, more particularly wood motif, situated there below.

For realizing impressed portions at the decor side, as is known, press elements provided with relief are applied. Various techniques are known for manufacturing such press elements. For example, it is known from WO 2006/066776 to apply etching treatments and/or milling treatments, and it is known from WO 2006/090287 to apply laser treatments. After the press elements are structured, they usually also are provided with a hard coating layer, such as a chrome layer or another layer, such as the one known as such from WO 2008/120058 or EP 1 417 090. The press elements which are obtained by means of such methods still leave much to be desired, in particular in respect to the refinement of the obtained relief and the manner in which the latter can be copied in the synthetic material surface of the laminate panel.

From WO 2004/067292, it is known to realize, by means of etching treatments, press elements with larger relief portions, which show at least two zones with a transition relief lying in between, wherein this transition relief is made finer and less deep than the relief of the respective zones. The press element thus provided with relief is coated with a chrome layer. The obtained press element is applied for realizing a structure in a door panel consisting of MDF or HDF. The created structure relates to a structure of wood pores and/or wood nerves, which is provided directly in said MDF or HDF material. This technique does not allow forming different gloss degrees. Moreover, here, too, the refinement of the relief possibly to be obtained still leaves much to be desired.

From US 2008/022626 it has become known in the meantime to realize an angle-dependent optical effect on the surface of a floor covering, wherein the perceived image on the floor surface depends on the angle under which this surface is observed. Here, this always relates to an angle-dependent rendition of information over a very large part of the floor surface, as a consequence of which a relatively coarse structure has to be used. Moreover, the structure is situated underneath a possible protective layer, which can interfere with the optical effect.

The present invention aims at a laminate panel with an alternative relief which, according to various preferred embodiments of the invention, can offer advantages in respect to the state of the art.

To this aim, the invention, according to its first independent aspect, relates to a laminate panel of the type comprising a substrate and a provided-thereon synthetic material layer with a printed decor, wherein said synthetic material layer at the surface comprises a zone of reduced gloss degree, with the characteristic that said zone in itself has a microstructure of preferably uniformly distributed recesses and/or protrusions. The insight that by means of such microstructure the gloss degree of a zone can be determined, leads to new and/or smoother imitation possibilities. The inventor has also recognized that by varying the depth, density and/or shape of the recesses and/or protrusions, the gloss degree can be chosen. In this manner, the laminate panel of the invention can be produced in a more reliable and repeatable manner.

The term "microstructure" as such does not comprise any limitations in respect to the dimensions of said recesses and/or protrusions, but is defined as a structure which provides for that the respective zone globally is perceived by the user of the laminate panel as a zone having a reduced gloss degree. Preferably, the maximum height differences in the respective zone are smaller than 50 µm and still better smaller than 20 µm.

Said microstructure can be performed in different ways.

According to a first possibility, said microstructure comprises at least pointwise performed recesses and/or protrusions. By means of such microstructure, a gloss degree can be realized, which is independent or almost independent from the angle or direction under which the laminate surface is observed. Preferably, said pointwise performed recesses and/or protrusions show the feature that the radius of their circumscribed circle at the basis of the protrusion, at the edge of the protrusion, respectively, is larger than the height, depth, respectively, thereof. In this manner, a relatively shallow microstructure is obtained, in between which no or little dirt can adhere. Moreover, in such geometry more influence on the final gloss degree can be expected from the walls of the recesses and/or protrusions. By varying the density and/or the depth or the size of the pointwise performed recesses and/or protrusions, the gloss degree can be chosen. The uniformity of the pointwise performed recesses and/or protrusions preferably is shown by the fact that their geometrical centers of gravity are distributed uniformly or almost uniformly. Preferably, the geometrical centers of gravity are situated on lines which are equidistant and/or parallel. Preferably, they are situated on straight lines. Preferably, the pointwise performed recesses and/or protrusions have circular cross-sections. However, it is not excluded that polygonal or other, preferably convex cross-sections are applied.

According to a second possibility, said microstructure comprises at least line-wise performed recesses and/or protrusions. By means of such microstructure, a gloss degree can be realized which is depending on the angle or the direction under which the laminate surface is observed. When this surface is observed in the direction of said lines, a higher gloss degree can be observed than when this surface is observed perpendicular to these lines. It is not necessary that by means of this second possibility an angle- or direction-dependent effect is obtained. Line-wise recesses and/or protrusions can also be applied for obtaining an angle-independent reduced gloss degree. Preferably, said line-wise performed recesses and/or protrusions show the feature that the width at the basis of the protrusion, at the edge of the recess, respectively, is larger than the height, depth, respectively, thereof. In this manner, a relatively shallow microstructure is obtained, in between which no or little dirt can adhere. Moreover, in such geometry more influence on the final gloss degree can be expected from the walls of the recesses and/or protrusions. By varying the density and/or the depth or the size of the line-wise performed recesses and/or protrusions, the gloss degree can be chosen. The uniformity of the line-wise performed recesses and/or protrusions preferably is shown by the fact that they are equidistant and/or parallel. Preferably, according to this second possibility recesses and/or protrusions are concerned, which are performed in a straight line.

According to a third possibility, said microstructure shows at least a waffle structure. Such waffle structure can be obtained by superposing at least two mutually perpendicular oriented microstructures of said second possibility.

According to a particular embodiment, said zone forms part of a larger relief portion, which comprises a plurality of such zones, wherein these zones, whether or not all of them, are realized according to the same above-mentioned possibility therefor. Preferably, said zone differs from another zone from the same larger relief portion at least in that the recesses and the protrusions of their respective microstructures have a different density, depth and/or orientation. In this manner, special effects can be realized, wherein, for example, the gloss degree of the respective relief portion or the zone showing this gloss degree, depends on the angle or direction under which the surface is observed. Preferably, said zone adjoins via a transition relief to said other zone of said larger relief portion, wherein the recesses and the protrusions, which form the microstructure of said transition relief, have an intermediate density, depth and/or orientation in comparison to said adjoining zones. In this manner, more natural transitions among the different zones can be achieved, wherein a possible angle- or direction-dependent optical effect may show a continuous or quasi-continuous alteration over a certain angle, for example, an alteration of the gloss degree or an alteration of the location where such gloss degree occurs.

As already mentioned above, the laminate panel of the invention, according to a preferred embodiment thereof, is **characterized in that** said zone results in an angle- or direction-dependent optical effect. The manner in which such effect can be achieved, is not limited to the above examples thereof. Preferably, said angle- or direction-dependent optical effect consists in that the gloss degree of said zone depends on the angle under which the surface of the synthetic material layer is observed. According to a particular possibility for forming such optical effects, the microstructure results in an interference pattern, for example, a moiré interference pattern. Such moiré interference pattern can be achieved, for example, when use is made of a microstructure which is made according to said third possibility therefor, wherein at least one of the superposed microstructures each as such already results in an angle- or direction-dependent optical effect, in that the apparent distance between the line-wise recesses and/or protrusions of this microstructure is angle- or direction-dependent.

The printed decor of the laminate panel of the invention can comprise, for example, a wood motif. Preferably, said zone, or the relief portion which comprises this zone, coincides with a wood characteristic depicted in the printed decor. Namely, the invention is of particular interest when it is applied for imitating so-called wood silver grains (English: silver grain). These wood characteristics are formed by cutting through a wood structure which fans out from in the center of the tree trunk towards the bast, and such perpendicular to the annual rings. This wood structure is also called medullary ray or medullary ray cells (English: medullary ray). For example, such structure is present very prominently in oak, beech or maple and can have an angle-dependent glossy effect. When imitating such wood silver grain, preferably a larger relief portion consisting of a plurality of said zones and/or transition reliefs are used, wherein this relief portion then coincides or approximately coincides with a wood silver grain depicted in the printed decor. Preferably, by the cooperation of the different zones of the larger relief part, an angle-dependent gloss degree is obtained. The invention is also of interest for imitating deeper situated wood portions, such as scraped-away portions, weather-beaten portions or wood nodes. By realizing a zone with reduced gloss degree, which coincides with an image of such portions in the printed decor, an optical illusion of depth can be created, although the surface of these portions is situated not or only a little bit lower than the global surface of the laminate panel.

According to another example, the printed decor of the laminate panel of the invention may represent a stone motif. Preferably, the aforementioned zone, or the relief portion comprising this zone, coincides with a stone characteristic depicted in the printed decor. Namely, the invention is of particular interest for imitating shaling rock, such as slate. Herein, zones or relief portions of lowered gloss degree can be applied for imitating different shales or surface levels. As explained above, the different possibilities for realizing such zones allow to vary the gloss degree depending on the density, orientation and/or depth of the recesses and/or protrusions which form the microstructure of the zones concerned. For example, the invention can be applied with panels similar to those of US 2006/144004.

According to a second independent aspect, the invention further relates to a method which, amongst others, is particularly suited for manufacturing the laminate panels of the first aspect. To this aim, the invention relates to a method for manufacturing laminate panels of the type comprising a substrate and a provided-thereon synthetic material layer with a printed decor, wherein the method comprises at least the following steps:
- the step of manufacturing a press element which is provided with a relief;
- forming said laminate panels, wherein said press element is at least applied for realizing, by means of said relief, impressions in the surface of said laminate panels;
with the characteristic that during the manufacture of the press element, on one or more zones a treatment by means of a laser beam or electron beam is performed, such that a reduced gloss degree is obtained at these zones. It is clear that according to the invention said laser beam and/or electron beam treatment is at least partially and preferably entirely responsible for the obtained gloss degree. Further, it is clear that the respective zone not necessarily has to show a high gloss degree, but may also show a reduced gloss degree.

Said treatments by means of laser beam and/or electron beam are particularly advantageous, as they are able of removing particularly small amounts of material in an accurate manner. This is also the result of the fact that no mechanical contact is required for this treatment, but only an interaction between light and/or electrons with the material of the press plate. In the case of a laser beam, preferably a microstructure is realized which meets the characteristics of the second and/or third possibility mentioned in connection with the first aspect, whereas in the case of an electron beam preferably a microstructure is realized which meets the characteristics of the first possibility mentioned in connection with the first aspect. In the case of an electron beam, for example, a technique analogous to the EBT technique (Electron Beam Texturing) can be applied, wherein by means of an electron beam, tiny craters are realized in the surface of the press plate, which craters determine the roughness and the gloss degree of the final surface. In the case of a laser beam, preferably a so-called marking treatment is applied, wherein material is removed by means of the laser beam. Preferably, an Nd-YAG laser is used.

The method of the second aspect preferably is applied for manufacturing a laminate panel with the characteristics of the first aspect or the preferred embodiments thereof, wherein the microstructures of recesses and/or protrusions mentioned there are realized by forming, at the surface of the laminate panel, impressions by means of the aforementioned zones of the press element, which zones have been treated by laser beam or electron beam.

According to a particular preferred embodiment, said press element, prior to being treated with said laser beam or electron beam, is provided with a chrome layer or another hard coating layer. For example, it may be opted for a coating layer of the type which is known as such from WO 2008/120058. Laser beams or electron beams allow treating hard materials, such as ceramics or chromium, without any problem. The fact that the treatment by means of the laser beam and/or the electron beam can be performed after applying such coating layer, offers many advantages. For example, it is possible to realize very fine microstructures, without the risk that a coating layer, which would be applied later, would cause these microstructures to disappear entirely or completely. However, it is not excluded that the coating layer treated with the laser or electron beam might be coated further with an extra layer.

According to said particular preferred embodiment, the microstructure, which is applied by the laser beam or electron beam, preferably remains restricted in depth to the thickness of said chrome layer or other coating layer. In this manner, the entire respective side of the press element remains protected by the chrome layer or other coating layer, and the entire microstructure as such is made wear-resistant. Preferably, said chrome layer or other coating layer has a thickness of less than 50 µm, and still better of 20 µm or less.

Preferably, said press element, before being treated with said laser beam or electron beam, is provided with a structure by means of one or more etching treatments and/or machining treatments by means of a mechanical tool, such as a rotating milling tool. When both an etching treatment and a mechanical machining treatment are applied, the etching treatment preferably is performed earlier than the mechanical machining treatment. Preferably, such etching treatments and/or mechanical machining treatments are performed on the press element while this press element is free from coating layers, such as chrome layers or other hard coating layers. As is clear from said preferred embodiment, after performing these etching treatments and/or mechanical machining treatment, it may be proceeded to chroming or providing another coating, before, according to the invention, the treatment by means of a laser beam and/or electron beam is performed. For said etching treatment, a chemical or electrochemical etching treatment can be applied.

Said particularly preferred embodiment also has advantages when other treatments than the above-mentioned laser beam or electron beam treatments are performed on the coating layer. Namely, it is particularly interesting that the result of such treatments is substantially or entirely maintained in a structured press element finally provided with the coating layer. Therefore, the invention, according to an independent third aspect, also relates to a method for manufacturing laminate panels of the type comprising a substrate and a provided-thereon synthetic material layer with a printed decor, wherein the method comprises at least the following steps:
- the step of manufacturing a press element with a relief;
- forming said laminate panels, wherein said press element is at least applied for realizing, by means of said relief, impressions in the surface of said laminate panels;
with the characteristic that during the manufacture of the press element, a chrome layer or other hard chrome layer is applied and that this hard layer subsequently is treated locally, too. By a "local" treatment, a treatment is intended which treats only a portion of the surface of the press element. Preferably, the local treatment is limited to less than half of the surface of the press element, and still better to less than 20 percent of this surface. Of course, the above-mentioned laser beam or electron beam treatments can be applied as local treatments. It is also possible to apply techniques, such as sandblasting, shotpeening or the like. Preferably, this relates to a material-removing technique and/or a technique in which no mechanical contact with the surface of the press element is required. It is not excluded to work with a material-adding technique, such as a technique whereby locally material is deposited in an electro-chemical manner.

Preferably, in the methods of the invention flat press elements are used, namely, so-called press plates or press platens. However, it is not excluded to work with press belts or press rollers. Preferably, the press element of the invention has a pressing surface which is larger than 0.8 m² and still better is larger than 5 m². It is clear that by means of the methods of the invention predominantly larger laminate boards can be manufactured, from which afterwards smaller laminate panels can be obtained by subdividing them, for example, by means of sawing. Said press element preferably has a pressing surface which corresponds to the surface of one or more of the final laminate panels. Preferably, the surface of the press element corresponds to the surface of at least three of such laminate panels.

Preferably, in the methods of the invention the DPL technique is applied, wherein then preferably said printed motif is provided on a carrier sheet, such as a paper sheet. As synthetic material, preferably melamine-based resin is applied. A separate protective layer may or may not be used, also being on the basis of a carrier sheet or paper sheet which is provided with melamine.

It is clear that the invention also in an independent manner relates to press elements which can be applied in the methods of the second and/or the third aspect. For several specific examples of such press elements, reference is made to the description of the respective aspects. According to a particular preferred embodiment of such press element, this press element shows the characteristics that the press element substantially consists of a preferably plate-shaped element, preferably on the basis of a steel alloy or on the basis of a copper alloy, such as on the basis of brass, wherein a coating layer, preferably a chrome layer, is provided on the pressing side of the press element, and wherein said chrome layer comprises one or more zones with a microstructure of recesses and/or protrusions, wherein this microstructure is limited to the thickness of said coating layer. Preferably, the underlying portion of the actual element is made flat at the location of the zone concerned. In combination with such microstructure, it is possible that the press element further is provided with relief portions at its pressing side, which relief portions also can be found in the underlying portion of the press element.

When in the above text passages zones having a reduced gloss degree are mentioned, it is intended that the respective zones, compared to surrounding portions of the decor side of the laminate panel, preferably have a gloss degree which is at least 1 point lower and preferably is at least 3 points lower. It is clear that according to certain preferred embodiments, this difference in gloss degree can vary depending on the angle or the direction under which the surface is observed, and that this difference can even vanish. Preferably, the zones with reduced gloss degree have a gloss degree of 10, or even better less than 10, whereas the surrounding portions of the decor side have a gloss degree of more than 10, or even better of more than 20; all that measured according to DIN 67530.

When measuring the gloss degree on the press plate, a glossy zone preferably corresponds to a gloss degree of more than 40 and still better of more than 100, and a matte zone corresponds to a gloss degree of less than 40, also measured according to DIN 67530.

With the intention of better showing the characteristics of the invention, hereafter, as an example without any limitative character, some preferred embodiments are described, with reference to the accompanying drawings, wherein:
Figure 1 represents a laminate panel with the characteristics of the invention;
Figure 2, at a larger scale, represents a cross-section according to the line II-II represented in figure 1;
Figure 3, at a larger scale, represents a view on the area indicated by F3 in figure 1;
Figure 4, at an even larger scale, represents a cross-section according to the line IV-IV represented in figure 3;
Figure 5 schematically represents a step in a method with the characteristics of the invention;
Figures 6 to 9 represent some more steps in a method according to the invention; and
Figures 10 and 11 represent variants in a view similar to that of figure 3.

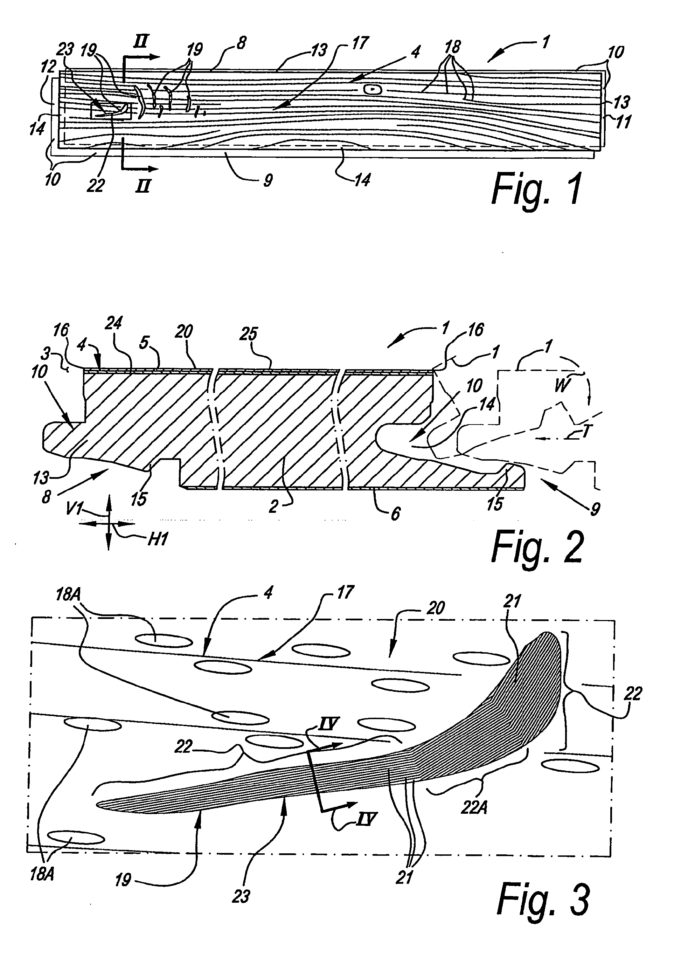

Figure 1 represents a laminate panel 1, more particularly a floor panel with the characteristics of the invention. To this aim, a laminate panel 1 is concerned, of the type which, as figure 2 clearly shows, comprises at least a substrate 2 and a top layer 3 present on this substrate 2. As figure 2 schematically represents, the top layer 3 comprises a printed decor 4 and a synthetic material layer 5 situated on this decor 4. Moreover, at the bottom side of the laminate panel 1, a backing layer 6 is provided, which also comprises synthetic material or plastic 7.

In the present case, the floor panel 1, at least at two opposite sides 8-9, is provided with coupling means 10, which allow that two of such floor panels 1 can be coupled to each other, such that in the coupled condition a connection between these floor panels 1 is created in a vertical direction V1 perpendicular to the plane of the coupled floor panels 1, as well as in a horizontal direction H1 perpendicular to the respective coupled sides 8-9. Here, this relates to coupling means 10 which are integrated in the floor panel 1. In this case, they are even made in one piece with the floor panel 1, more particularly in one piece with said substrate 2. Of course, such coupling means 10 may also be present at the short sides 11-12 of the floor panel 1. The coupling means 10 represented here substantially consist of a tongue and groove connection, wherein the tongue 13 and the groove 14 are provided with locking elements 15, which, in the coupled condition of two of such floor panels 1, effect said connection in horizontal direction H1.

As represented with the dashed lines at the right hand side of figure 2, the coupling means 10 represented here allow a connection by means of a substantially horizontal shifting movement T of the floor panels 1 to be coupled towards each other, as well as by means of a turning movement W around the upper edges 16 of the floor panels 1 to be coupled. It is noted that the coupling means represented here are known as such from WO 97/47834. It is not excluded that coupling means 10 are applied which allow only one of both aforementioned coupling manners and/or that coupling means 10 are applied which at least or only allow a coupling by means of a downward movement, also named "pushlock". For examples of coupling means which allow a coupling by means of a downward movement, reference is made to WO 01/02669 and WO 03/016654.

As a substrate 2, preferably a wood-based substrate is used, such as MDF or HDF (Medium Density Fiberboard or High Density Fiberboard). Of course, other substrates 2, such as substrates substantially consisting of synthetic material, are not excluded.

Figure 1 clearly represents that the printed decor 4 of the floor panel shows a wood pattern 17, wherein this pattern 17, amongst others, represents wood pores 18 and wood silver grains 19.

Figure 3 represents that the floor panel 1 of the example, at the surface 20 of said synthetic material layer 5, is provided with a structure of recesses 18A in the form of wood pores following the wood nerves represented in the printed decor 4.

Consistent with the first aspect of the invention, the synthetic material layer 5, at the surface 20, comprises at least a zone 22 of reduced gloss degree. In this case, this zone 22 forms part of a larger relief portion 23, which comprises a plurality, in this case three, of such zones 22-22A. According to the invention, the respective zone 22 has a microstructure of uniformly distributed recesses 21, which in this case are line-wise performed.

Figure 3 also forms an example of a relief portion 23 comprising two zones 22, wherein the respective microstructures differ from each other in that they have at least a different orientation. By means of this technique, an angle- or direction-dependent optical effect can be obtained, wherein the gloss degree varies depending on the angle or the direction under which the laminate surface 20 is observed.

The relief portion 23 of figure 3 imitates a wood silver grain 19 and corresponds to an image of such wood silver grain 19 which is situated in the printed motif 4.

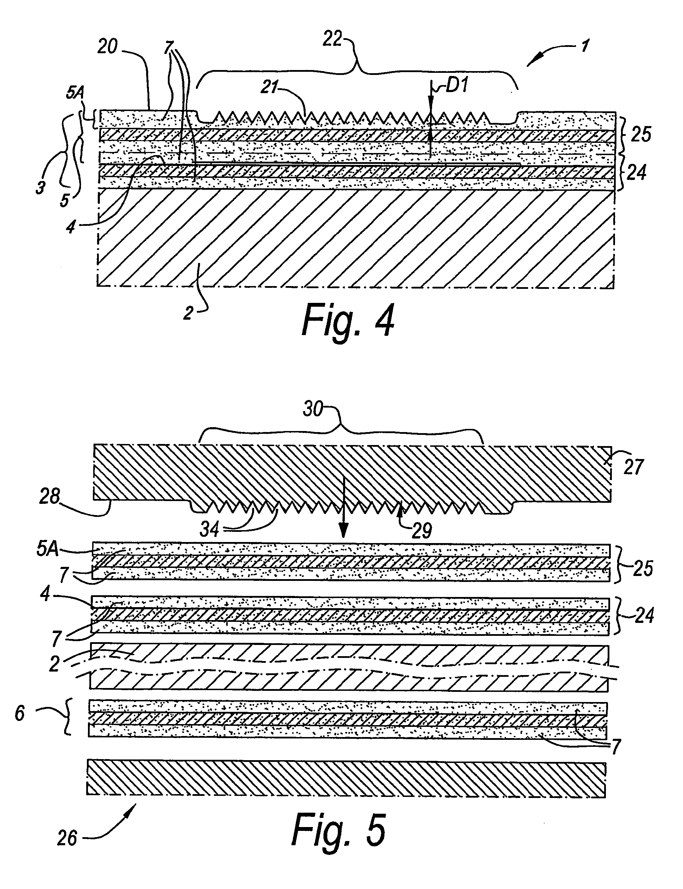

Figure 4 shows, in a cross-section across the top layer 3 of the laminate panel 1, that this microstructure preferably is restricted to the uppermost synthetic material layer 5A of the laminate panel 1. In the example, this relates to a DPL laminate panel 1 composed in a classical manner, which comprises a decor sheet or decor paper 24 provided with resin, with an overlay paper 25 which is situated there above and also is provided with resin 7. Said print or printed decor 4 is provided on the decor paper 24. According to not represented embodiments, additional paper layers can be applied, for example, underneath the decor paper 24, or one or both paper layers 24-25 can be omitted. For example, a floor panel 1 without carrier sheets or paper sheets in the top layer 3 can be formed by printing the print or the printed decor 4, possibly with the intermediary of one or more primer layers, directly on the substrate 2 and providing a paperless synthetic material layer 5 there above. Preferably, according to the invention, independently from the number of applied carrier sheets in the top layer 3, a thermo-hardening resin is used, such as a melamine-based resin, for example, melamine formaldehyde resin. Preferably, also the bond between the top layer 3 and the substrate 2 is obtained by means of a thermo-hardening resin, preferably by means of the thermo-hardening resin which originally was provided on said decor paper 24.

As represented, the microstructure concerned preferably remains restricted in depth D1, such that the deepest valleys of this microstructure still are situated above the uppermost carrier sheet 24-25, in this case, above the overlay 25. In the case that not a single carrier sheet is present, the microstructure concerned preferably remains restricted in depth to above the print of the printed decor 4.

As represented, the microstructure concerned preferably remains with the majority of its highest peaks below the global surface of the surrounding laminate surface 20 or coincides therewith. In this manner, it is obtained that the microstructure of the respective zone 22-22A or relief portion 23 is less subjected to wear, as it practically is not directly subjected to load when the floor covering is walked on. The size of the individual zones 22-22A or the individual relief portions 23, which, according to the invention, are provided with a microstructure, preferably is limited to a maximum of 10 cm² and still better to a maximum of 2 cm².

Preferably, hard particles, such as aluminum oxide particles, are present in said uppermost resin layer 5A. Such particles are not represented here. Preferably, this concerns particles having an average grain size of less than 50 µm, and still better of less than 30 µm. Preferably, flat corundum particles are used. In this manner, an increased scratch resistance of the laminate surface can be obtained and said microstructure can be made wear-resistant.

By way of example, figure 5 schematically represents a step of a method with the characteristics of the second and the third aspect of the invention. Here, this relates more particularly to the step of forming the laminate panels 1, in this case, by means of the already above-mentioned DPL technique. To this aim, at least the substrate 2 or a board comprising this substrate 2, the decor paper 24 and the overlay 25 or protective layer are brought into a press device 26, where they are consolidated by means of a press element 27. In the represented example, the stack also comprise a so-called backing layer 6 or balancing layer at its underside, which layer is intended for being provided against the underside of the substrate 2, and which in this case also consists substantially of a material sheet, such as a paper sheet, provided with synthetic material 7 or resin.

The press element 27, in this case a substantially flat press plate or press platen, is provided with a relief 29 at its surface or pressing side 28. In the step of forming the laminate panels 1, said press element 27 is applied for realizing, by means of the relief 29, impressions in the decor side of the laminate panels 1, or more particularly in the decor side of boards from which such laminate panels 1 can be obtained. Herein, the relief 29 of the press element 27 comprises at least a zone 30 of reduced gloss degree.

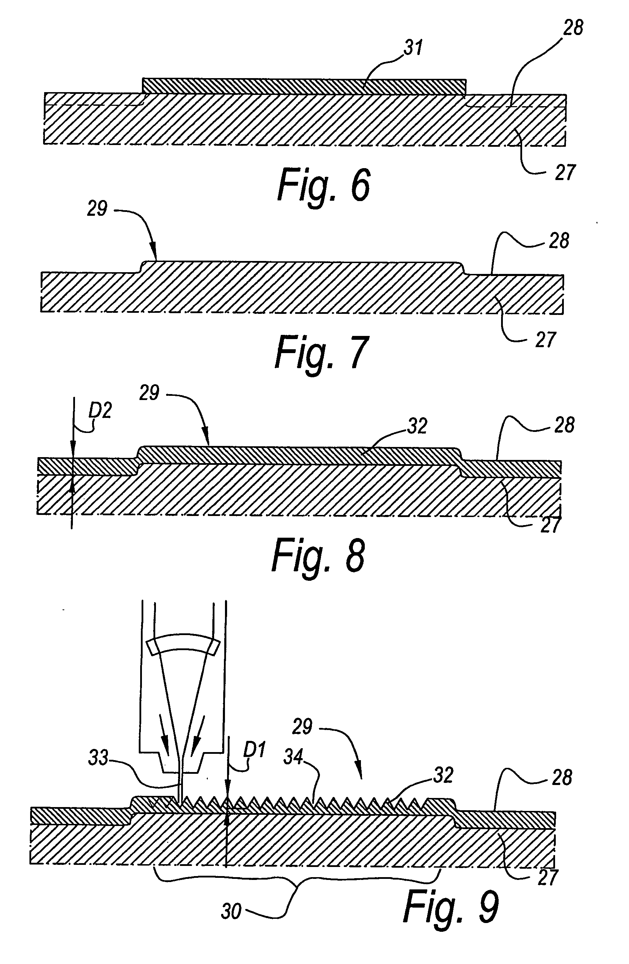

Figures 6 through 9 represent how such press element 27 can be manufactured. Figure 6 shows that an etching treatment can be performed. To this aim, a mask 31 is provided on the press element 27, wherein this mask 31 protects underlying portions of the press element 27 against the erosive etching treatment.

Figure 7 represents the result of such etching treatment. Possibly, several etching treatments may be performed one after the other, such that a plurality of different levels is achieved. For examples of such multiple etching treatments, reference is made to US 2006/144004.

In combination with or instead of an etching treatment, also a machining treatment can be performed by means of a mechanical tool. Such treatment is not represented here. For examples of such machining treatment, reference is made to WO 2006/066776.

Figure 8 represents the same press element 27 after this press element 27 is provided with a hard coating layer 32, such as a chrome layer. Possibly, such chrome layer can be polished. The thickness D2 of the hard coating layer 32 preferably is limited to a maximum of 30 µm and still better to maximum 20 µm.

Figure 9 represents that when manufacturing the press element 27, on one or more zones 30 a treatment by means of a laser beam 33 is performed, such that at the location of the respective zone 30 a reduced gloss degree is obtained. To this aim, in the example, by means of the laser beam 33 a microstructure of recesses 34 is realized locally in the hard coating layer 32. For example, the technique of laser marking or laser engraving can be applied for this purpose. When using a laser beam or other beam-shaped medium, this latter can be moved over the press element 27 by means of a portal machine (English: Gantry-type machine) in the two directions of the plane determined by this press element 27, wherein possibly also a movement in a direction perpendicular to said plane is possible. This perpendicular movement can be desired for setting the focusing distance of a laser beam, and/or when the press element to be treated already is provided with a coarser structure, for example, with an etched or milled structure.

It is clear that the obtained press plate 27 of figure 9 can be applied for manufacturing laminate panels 1 as represented in figure 4, according to the method of figure 5, wherein then the microstructures of recesses 21 mentioned there are realized by forming impressions at the surface 20 of the laminate panel 1 by means of said laser beam-treated zones 30 of the press element 27.

It is noted that, as represented in figure 9, when manufacturing the press element 27, a chrome layer 32 can be provided and that this layer 32 subsequently also is treated locally, as in this case by means of said treatment by means of a laser beam 33. It is clear that the method as represented in figures 5 through 9 thus also forms an illustration of the third aspect of the invention mentioned in the introduction. Further, it is clear that the press element 27 represented in these figures also, in an independent manner, forms a subject of the present invention.

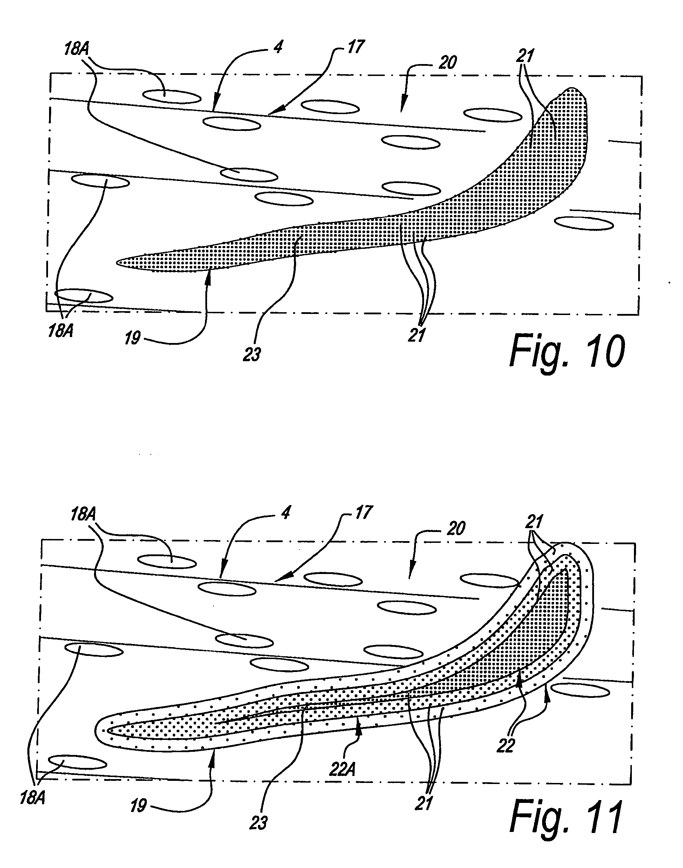

Figure 10 represents a variant for the zones 22 of reduced gloss degree mentioned in the first aspect. In the zone 22 represented here, the uniformly distributed recesses 21 are performed according to the first possibility mentioned there. To this aim, the microstructure concerned comprises pointwise performed recesses 21. This means that the respective microstructure comprises craters of a limited diameter, preferably with a diameter of less than 50 µm and still better less than 20 µm.

Figure 11 represents another variant of such zones 22-22A, wherein again a microstructure is applied which comprises pointwise performed recesses 21, however, wherein a plurality of such zones 22-22A form a relief portion 23. Herein, in this case three zones 22-22A are applied, which mutually differ from each other in that their respective recesses 21 have a different density. The relief portion 23 represented here comprises two zones 22, which adjoin against each other via a transition relief 22A, in this case, an intermediate zone 22A of said three zones. Herein, the recesses 21 forming the microstructure of said transition relief 22A have an intermediate density in comparison to the aforementioned two zones 22. In this manner, a dégradé (English: half tone) is realized. Such half tone can also be realized by zones of different depths and/or orientation, however, this is not represented here. By means of such half tones, particularly lively structures or gloss effects can be realized, which possibly may lead to angle- or direction-dependent optical effects and/or to a gradual transition between matte and less matte or even glossy portions of the laminate surface 20. It is noted that the contours of the zones 22-22A in the present example substantially are uniformly performed, wherein these contours moreover in this case are spaced from each other a mutually equal distances.

It is noted that the laminate panels 1 of the present invention preferably relate to floor panels which, as in the examples, preferably are of the type which can be installed glue-free. Floor panels which can be installed in a glue-free manner are known as such, for example, from WO 97/47834. However, the technique concerned also may be applied for manufacturing furniture panels, wall panels, ceiling panels and the like.

According to the invention, any material can be applied as a substrate 2. For example, a wood-based board material, such as particle board, MDF or HDF (Medium Density Fiberboard or High Density Fiberboard) or multiplex board can be applied.

The present invention is in no way limited to the herein above-described embodiments; on the contrary, such methods and laminate panels may be realized according to various variants, without leaving the scope of the present invention.

## Claims

1. Laminate panel of the type comprising a substrate (2) and a provided-thereon synthetic material layer (5) with a printed decor (4), wherein said synthetic material layer (5) at the surface (20) comprises a zone (22-22A) of reduced gloss degree, **characterized in that** said zone (22-22A) in itself has a microstructure of uniformly distributed recesses (21) and/or protrusions.

2. Laminate panel according to claim 1, **characterized in that** said microstructure comprises at least pointwise performed recesses (21) and/or protrusions.

3. Laminate panel according to claim 1 or 2, **characterized in that** said microstructure comprises at least line-wise performed recesses (21) and/or protrusions.

4. Laminate panel according to any of the preceding claims, **characterized in that** said microstructure shows at least a waffle structure.

5. Laminate panel according to any of the preceding claims, **characterized in that** said zone (22-22A) is part of a larger relief portion (23), which comprises several of such zones (22-22A).

6. Laminate panel according to claim 5, **characterized in that** said zone (22) differs from another zone (22) of the same larger relief portion (23) **in that** the recesses (21) and the protrusions of their respective microstructures have a different density, depth and/or orientation.

7. Laminate panel according to claim 6, **characterized in that** said zone (22), via a transition relief (22A), adjoins to said other zone (22) of said larger relief portion (23), wherein the recesses (21) and the protrusions which form the microstructure of said transition relief (22A) have an intermediate density, depth and/or orientation in comparison to said adjoining zones (22).

8. Laminate panel according to any of the preceding claims, **characterized in that** said zone (22-22A) results in an angle-dependent optical effect.

9. Laminate panel according to claim 8, **characterized in that** said angle-dependent optical effect consists **in that** the gloss degree of said zone (22-22A) depends on the angle under which the surface (20) of the synthetic material layer (5) is observed.

10. Method for manufacturing laminate panels of the type comprising a substrate (2) and a provided-thereon synthetic material layer (5) with a printed decor (4), wherein the method comprises at least the following steps:
- the step of manufacturing a press element (27) which is provided with a relief;
- forming said laminate panels (1), wherein said press element (27) is at least applied for realizing, by means of said relief, impressions in the surface (20) of said laminate panels (1);
**characterized in that** during the manufacture of the press element (27), on one or more zones (30) a treatment by means of a laser beam (33) or electron beam is performed, such that a reduced gloss degree is obtained at these zones (30).

11. Method according to claim 10, **characterized in that** said treatment relates to a marking treatment.

12. Method according to claim 10 or 11, **characterized in that** it is applied for manufacturing a laminate panel (1) with the characteristics of any of the claims 1 to 9, wherein the microstructures of recesses (21) and/or protrusions mentioned there are realized by forming impressions at the surface (20) of the laminate panel (1) by means of said zones (30) of the press element which are treated with the laser beam (33) or electron beam.

13. Method according to any of the claims 10 to 12, **characterized in that** said press element (27), prior to being treated with said laser beam (33) or electron beam, is provided with a chrome layer (32) or another hard coating layer.

14. Method according to any of the claims 10 to 13, **characterized in that** said press element (27), prior to being treated with said laser beam (33) or electron beam, is given a structure by means of one or more etching treatments and/or machining treatments by means of a mechanical tool.

15. Method for manufacturing laminate panels of the type comprising a substrate (2) and a provided-thereon synthetic material layer (5) with a printed decor (4), wherein the method comprises at least the following steps:
- the step of manufacturing a press element (27) with a relief;
- forming said laminate panels (1), wherein said press element (27) is at least applied for realizing, by means of said relief, impressions in the surface (20) of said laminate panels (1);
**characterized in that** during the manufacture of the press element (27), a chrome layer (32) or other hard coating layer is applied and that this hard layer (32) subsequently is processed locally.
